# EUROPEAN PATENT APPLICATION

(11) **EP 2 873 941 A1**
(43) Date of publication of application: **20.05.2015**
(21) Application number: 13816762.2
(22) Date of filing: 04.07.2013
(51) Int. Cl.: F28F 21/06, C08L 25/06, C08L 71/12

(54) **HEAT EXCHANGER**

(30) Priority: 11.07.2012 JP 2012155342
(71) Applicant: Panasonic Intellectual Property Management Co., Ltd., Osaka-shi, Osaka 540-6207 (JP)
(72) Inventor: SUZUKI, Motohiro, Osaka-shi, Osaka 540-6207 (JP); MORIMOTO, Satoru, Osaka-shi, Osaka 540-6207 (JP); HOTEHAMA, Kenichi, Osaka-shi, Osaka 540-6207 (JP)
(74) Representative: Eisenführ Speiser
(86) International application number: PCT/JP2013/004166
(87) International publication number: WO 2014/010210

(57) **Abstract**

A heat exchanger 100 disclosed is a heat exchanger that exchanges heat between a first fluid and a second fluid. The heat exchanger 100 includes: a resin structure 10 forming a first flow path through which the first fluid flows; and a copper pipe 20 forming a second flow path through which the second fluid flows, the copper pipe 20 having at least a portion disposed in the first flow path. A resin component of a resin composition constituting the resin structure 10 contains, as a main component, a polymer alloy of a polyphenylene ether resin and a polystyrene resin. A mass ratio of the polyphenylene ether resin to the polystyrene resin in the polymer alloy is in the range of 40/60 to 65/35.

## Description

### TECHNICAL FIELD

The present invention relates to a heat exchanger for exchanging heat between a first fluid and a second fluid.

### BACKGROUND ART

In heat pump water heaters, air conditioners, floor heating devices, etc., heat exchangers for exchanging heat between a first fluid and a second fluid (e.g., between water and a heat medium or between air and a heat medium) are used.

An example of heat exchangers for exchanging heat between a first fluid and a second fluid is disclosed in Patent Literature 1. The heat exchanger of Patent Literature 1 includes a bent pipe made of metal and a resin casing housing the pipe. The bent pipe serves as a flow path through which a heat medium flows. In addition, the space between the outer peripheral surface of the bent pipe and the inner surface of the resin casing serves as a flow path through which water flows.

Another example of heat exchangers is disclosed in Patent Literature 2. The heat exchanger of Patent Literature 2 includes an outer pipe formed of a synthetic resin and an inner pipe disposed within the outer pipe. Patent Literature 2 describes an example in which the space between the outer pipe and the inner pipe serves as a flow path through which water flows. Patent Literature 2 also discloses an example in which a plurality of inner pipes helically twisted are disposed within the outer pipe.

### CITATION LIST

### Patent Literature

Patent Literature 1: JP 2002-333290 A
Patent Literature 2: JP 2006-078082 A

### SUMMARY OF INVENTION

### Technical Problem

In pipe connecting members for water heaters, etc., polyphenylene sulfide resins, which are excellent in chemical stability, have been conventionally used as a material of a resin casing that forms a flow path through which water flows. However, the density of polyphenylene sulfide resins is 1.3 to 1.4 kg/L, and is 40 to 50% higher than the density (0.9 to 1.0 kg/L) of widely-used thermoplastic resins (such as polypropylene and polyethylene). Therefore, although polyphenylene sulfide resins can provide high heat resistance and long-term reliability, it is difficult to ensure both such properties and reduction in weight and cost. In view of such circumstances, one object of the present invention is to provide a heat exchanger that has high heat resistance and long-term reliability and that allows reduction in weight and cost.

### Solution to Problem

In order to attain the above object, a heat exchanger of the present invention is a heat exchanger that exchanges heat between a first fluid and a second fluid, the heat exchanger including: a resin structure forming a first flow path through which the first fluid flows; and a copper pipe forming a second flow path through which the second fluid flows, the copper pipe having at least a portion disposed in the first flow path. A resin component of a resin composition constituting the resin structure contains, as a main component, a polymer alloy of a polyphenylene ether resin and a polystyrene resin. A mass ratio of the polyphenylene ether resin to the polystyrene resin in the polymer alloy is in the range of 40/60 to 65/35.

### Advantageous Effects of Invention

According to the present invention, it is possible to obtain a heat exchanger that has high heat resistance and long-term reliability and that allows reduction in weight and cost.

### BRIEF DESCRIPTION OF DRAWINGS

FIG. 1 is a perspective view showing an example of the heat exchanger of the present invention.
FIG. 2 is an exploded perspective view of the heat exchanger shown in FIG. 1.
FIG. 3 is a cross-sectional view of the heat exchanger shown in FIG. 1.
FIG. 4 is a perspective view showing another example of the heat exchanger of the present invention.
FIG. 5 is an exploded perspective view of the heat exchanger shown in FIG. 4.
FIG. 6 is a top view showing still another example of the heat exchanger of the present invention.
FIG. 7 is a cross-sectional view showing a portion of the heat exchanger shown in FIG. 6.
FIG. 8 is an exploded view showing a portion of the heat exchanger shown in FIG. 6.
FIG. 9 is a configuration diagram schematically showing an example of a heat pump water heater using the heat exchanger of the present invention.
FIG. 10 is a diagram showing a ¹H NMR spectrum of an alloy A used in Example 1.
FIG. 11 is a diagram showing a FT-IR spectrum of the alloy A not having been subjected to any reliability test.
FIG. 12 is a diagram showing a FT-IR spectrum of the alloy A having been subjected to a reliability test 1.
FIG. 13 is a diagram showing a FT-IR spectrum of the alloy A having been subjected to a reliability test 2.
FIG. 14 is a diagram showing a FT-IR spectrum of the alloy A having been subjected to a reliability test 3.
FIG. 15 is a diagram showing a ¹H NMR spectrum of an alloy B used in Example 2.
FIG. 16 is a diagram showing a FT-IR spectrum of the alloy B not having been subjected to any reliability test.
FIG. 17 is a diagram showing a FT-IR spectrum of the alloy B having been subjected to the reliability test 1.
FIG. 18 is a diagram showing a FT-IR spectrum of the alloy B having been subjected to the reliability test 2.
FIG. 19 is a diagram showing a FT-IR spectrum of the alloy B having been subjected to the reliability test 3.
FIG. 20 is a diagram showing a ¹H NMR spectrum of an alloy C used in Comparative Example 1.
FIG. 21 is a diagram showing a FT-IR spectrum of the alloy C not having been subjected to any reliability test.
FIG. 22 is a diagram showing a FT-IR spectrum of the alloy C having been subjected to the reliability test 1.
FIG. 23 is a diagram showing a FT-IR spectrum of the alloy C having been subjected to the reliability test 2.
FIG. 24 is a diagram showing a FT-IR spectrum of the alloy C having been subjected to the reliability test 3.
FIG. 25 is a graph showing a relationship between the content of a polyphenylene ether resin in an alloy and the deflection temperature under load.
FIG. 26 is a graph showing a relationship between the content of a polyphenylene ether resin in an alloy and a given absorbance peak.

### DESCRIPTION OF EMBODIMENTS

Hereinafter, embodiments of the present invention will be described. In the following description, embodiments of the present invention are described with reference to examples; however, the present invention is not limited to the examples described below. In the following description, specific values or specific materials are mentioned as examples in some cases; however, other values or materials may be used as long as the effects of the present invention can be obtained.

### (Heat exchanger)

A first aspect of the present disclosure provides a heat exchanger that exchanges heat between a first fluid and a second fluid. This heat exchanger includes: a resin structure forming a first flow path through which the first fluid flows; and a copper pipe forming a second flow path through which the second fluid flows, the copper pipe having at least a portion disposed in the first flow path. A resin component of a resin composition constituting the resin structure contains, as a main component, a polymer alloy of a polyphenylene ether resin and a polystyrene resin. Hereinafter, the polymer alloy of the polyphenylene ether resin and the polystyrene resin may be referred to as "polymer alloy (P)". As used herein, the term "main component" means a component whose proportion in the resin component of the resin composition is 50 mass% or more. The proportion of the polymer alloy (P) in the resin component of the resin composition may be 60 mass% or more, 70 mass% or more, 80 mass% or more, 90 mass% or more, or 95 mass% or more. Typically, all of the resin component of the resin composition is the polymer alloy (P).

In the polymer alloy (P) used in the heat exchanger of the first aspect, the mass ratio of the polyphenylene ether resin to the polystyrene resin (polyphenylene ether resin/polystyrene resin) is in the range of 40/60 to 65/35.

The polymer alloy (P) is typically an alloy of a polyphenylene ether resin represented by the formula (1) below and a polystyrene resin represented by the formula (2) below.

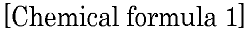

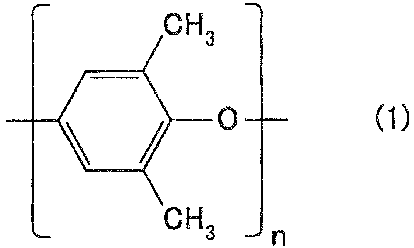

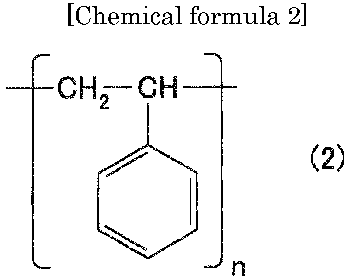

The polymer alloy (P) used may be a commercially-available product or may be fabricated by a commonly-known method.

In the polymer alloy (P), as mentioned above, the mass ratio of the polyphenylene ether resin to the polystyrene resin (polyphenylene ether resin/polystyrene resin) is in the range of 40/60 to 65/35. If the mass ratio of the polyphenylene ether resin is less than 40%, the heat resistance of the resin structure will be insufficient as described later. With the mass ratio of the polyphenylene ether resin being 40% or more, sufficient heat resistance for using carbon dioxide (whose temperature can increase up to 120°C, for example) as the second fluid can be obtained. However, if the mass ratio of the polyphenylene ether resin is more than 65%, the long-term reliability of the resin structure will be insufficient as described later.

A second aspect of the present disclosure provides the heat exchanger as set forth in the first aspect, wherein the resin composition includes an inorganic filler. That is, the resin composition constituting the resin structure may include a component other than resins. The inorganic filler is not limited, and any inorganic filler can be used as long as the previously-described effects can be obtained. Examples of the inorganic filler include graphite, talc, mica, molybdenum disulfide, and glass fiber. These inorganic fillers may be used alone, or two or more thereof may be used in combination. The proportion of the inorganic filler in the resin composition is not limited, and may be in the range of, for example, 0 volume% to 30 volume%.

The first fluid and the second fluid are each a heat medium. A third aspect of the present disclosure provides the heat exchanger as set forth in the first or second aspect, wherein the first fluid is water, and the second fluid is a refrigerant other than water. A fourth aspect of the present disclosure provides the heat exchanger as set forth in the third aspect, wherein the first fluid is water, and the second fluid is carbon dioxide.

A fifth aspect of the present disclosure provides the heat exchanger as set forth in any one of the first to fourth aspects, wherein a deflection temperature under load of the resin composition constituting the resin structure, as measured according to ASTM-D648 at a stress of 1.82 MPa, is 120°C or more.

A sixth aspect of the present disclosure provides the heat exchanger as set forth in any one of the first to fifth aspects, wherein, in a Fourier transform infrared spectrum (FT-IR spectrum) of the resin composition constituting the resin structure, a peak area of an absorbance peak around 1700 cm⁻¹ attributed to carbonyl groups is 0.13 times or less a peak area of an absorbance peak at 1180 cm⁻¹. Particularly, it is desirable that the peak area of the absorbance peak around 1700 cm⁻¹ attributed to carbonyl groups be 0.13 times or less the peak area of the absorbance peak at 1180 cm⁻¹ even after a long-term reliability test as described in Examples which corresponds to 10-year actual use is performed.

The copper pipe used in the heat exchanger of the present disclosure is not limited, and a commonly-known copper pipe may be employed. For example, the copper pipe may be a single copper pipe or may be a double copper pipe (leakage detection pipe) as disclosed in JP 2006-078082 A.

Hereinafter, an embodiment of the present invention will be described with reference to the drawings. The same parts are denoted by the same reference characters and are not repeatedly described, unless other particular matters should be described. The following embodiment is described, in some cases, by taking as an example a heat exchanger that exchanges heat between water serving as the first fluid and carbon dioxide serving as the second fluid.

### (Embodiment 1)

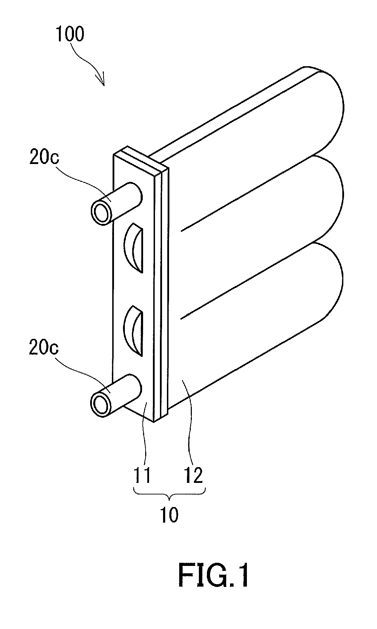

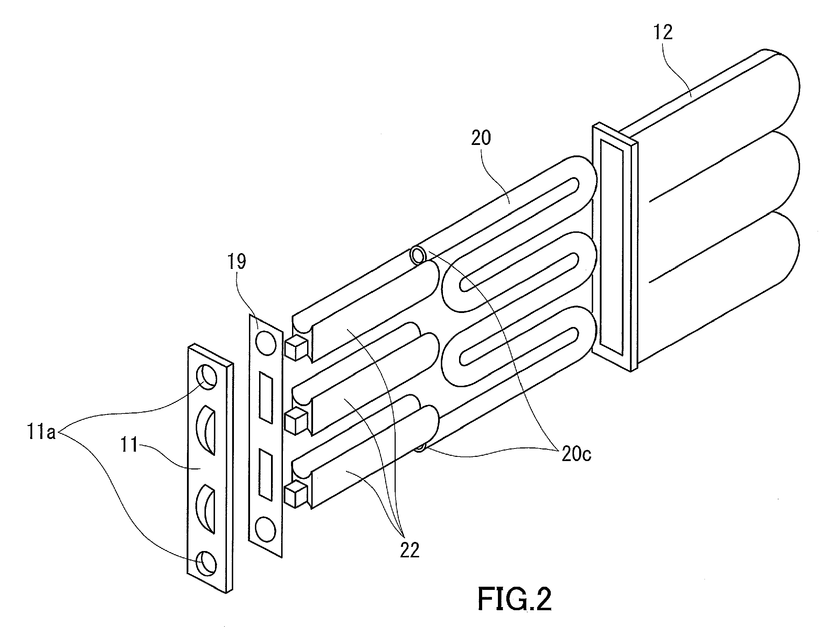

An overall perspective view of a heat exchanger 100 of Embodiment 1 is shown in FIG. 1. In addition, an exploded perspective view of the heat exchanger 100 is shown in FIG. 2. The heat exchanger 100 is a heat exchanger for heat release. The heat exchanger 100 includes a resin structure 10, a bent copper pipe 20, a packing 19, and spacers 22. A portion of the copper pipe 20 is enclosed within the resin structure 10. The resin structure 10 includes a cover 11 and a resin casing 12. The spacer 22 may be considered a portion of the resin structure. Also, the cover 11 may be considered a member distinct from the resin structure. In either case, the resin structure includes at least the resin casing 12.

As shown in FIG. 2, the copper pipe 20 is bent at a plurality of points (e.g., five points) in a bellows shape. The cover 11 is provided with two pipe supports 11a through which the two end portions of the copper pipe 20 penetrate. The packing 19 for sealing is disposed between the cover 11 and the resin casing 12. The copper pipe 20 is placed within the resin structure 10 in such a manner that the end portions 20c penetrate through the pipe supports 11a of the cover 11.

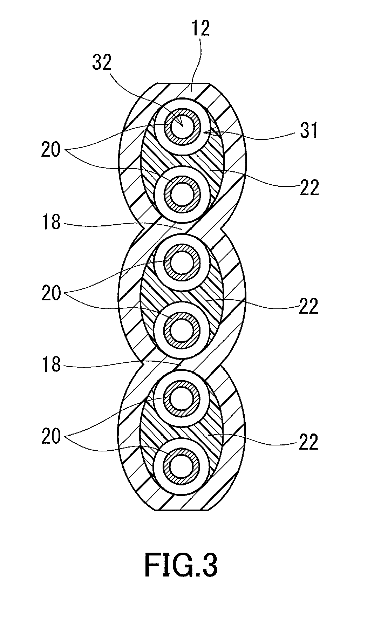

The interior of the resin casing 12 is divided into three columnar spaces by partition walls 18 shown in FIG. 3. Furthermore, each columnar space is partitioned by the spacer 22. A space conforming to the shape of the bent copper pipe 20 is formed in the resin casing 12 by the partition walls 18 and spacers 22. This space serves as a first flow path 31 through which the first fluid (water) flows. Two opening portions (water joints) communicating with the first flow path 31 are formed in the resin casing 12 (the opening portions are omitted from the drawings). Water is introduced and discharged through these opening portions. The second fluid (refrigerant) having been heated flows in the copper pipe 20 serving as a second flow path 32.

An example of the method of assembling the heat exchanger 100 will be described. First, the spacers 22 are fixed to the cover 11. Next, the two end portions 20c of the copper pipe 20 are fixed by inserting them in the pipe supports 11a of the cover 11. The opening of the resin casing 12 is sealed by the cover 11 to which the copper pipe 20 and the spacers 22 are fixed in the above manner. At this time, the packing 19 is used for hermetic sealing. When the cover 11 is fixed to the resin casing 12, the curved side surfaces of the spacers 22 come into contact with the inner wall of the container, and thus the spacers 22 are positioned relative to the resin casing 12. In this way, the assembling is completed. As a result of the assembling, as shown in FIG. 3, the first flow path 31 curved along the bends of the copper pipe 20 is formed around the outer periphery of the copper pipe 20. The interior of the copper pipe 20 serves as the second flow path 32.

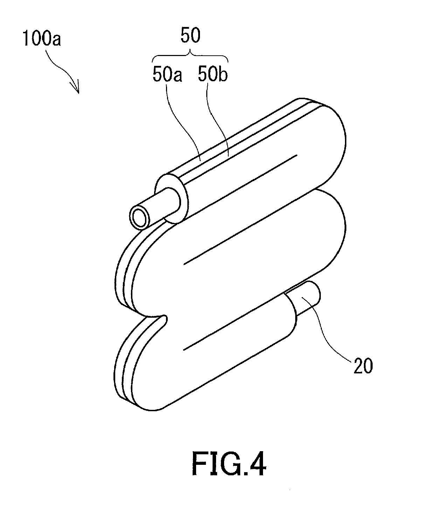

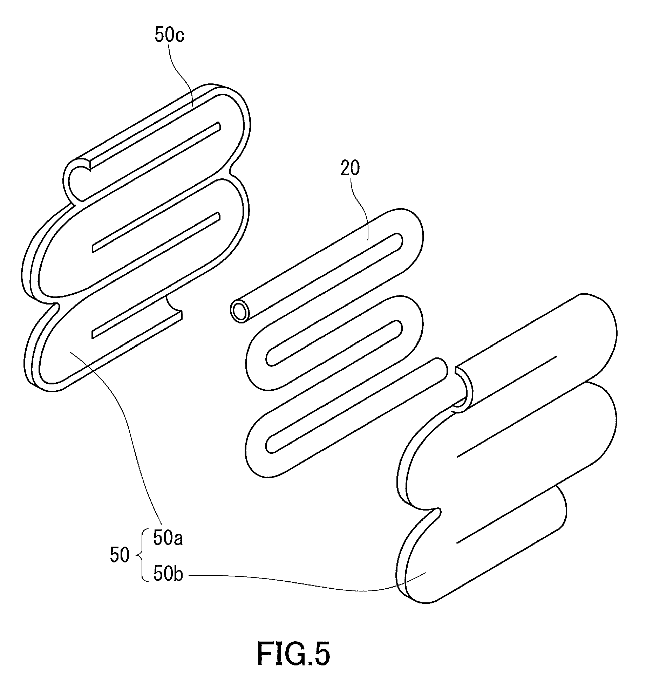

The resin structure 10 may be a structure formed by bonding (e.g., welding) a plurality of members together. A perspective view of a heat exchanger 100a according to such an example is shown in FIG. 4. In addition, an exploded perspective view of the heat exchanger 100a is shown in FIG. 5.

As shown in FIG. 5, the copper pipe 20 is bent at four points in a bellows shape. In the heat exchanger 100a, the bent copper pipe 20 is placed within a resin structure 50 composed of two half casing pieces 50a and 50b. The copper pipe 20 forms the second flow path, and the refrigerant which is the heated second fluid flows in the copper pipe 20. The grooves on the inner sides of the half casing pieces 50a and 50b are formed in conformity with the shape of the bent copper pipe 20. Therefore, the first flow path is formed along the bent copper pipe 20 by welding the half casing pieces 50a and 50b together at their welding portions 50c. That is, the resin structure 50 has the same functions as the cover 11, the resin casing 12, and the spacers 22 of the heat exchanger 100.

With the copper pipe 20 being sandwiched between the half casing pieces 50a and 50b, the two end portions of the copper pipe 20 project from two opening portions of the resin casing 50. Packings (not shown) are fitted around the outer periphery of the copper pipe 20 at locations where the copper pipe 20 projects from the resin casing 50, and the outer periphery of the copper pipe 20 and the resin casing 50 are hermetically connected by the packings. A water joint (not shown) is formed in the resin casing 50 composed of the half casing pieces 50a and 50b.

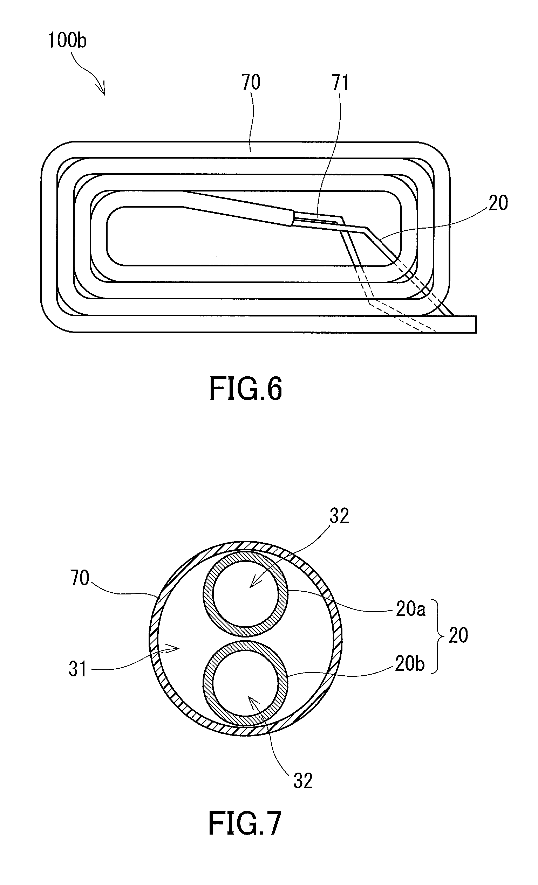

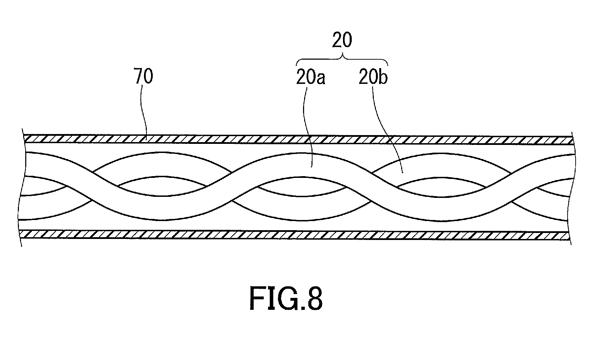

Alternatively, the resin structure may be a pipe made of resin. A top view of such an example is shown in FIG. 6. A cross-section view of the pipe shown in FIG. 6 which is taken perpendicular to the longitudinal direction is shown in FIG. 7. An exploded cross-sectional view taken in a direction parallel to the longitudinal direction is shown in FIG. 8.

The heat exchanger 100b shown in FIG. 6 includes a pipe-shaped resin structure (outer pipe) 70 and the copper pipe 20. A pipe 71 for introducing water (first fluid) is connected to the resin structure 70. The copper pipe 20 forms the second flow path 32, and, for example, a superheated gaseous refrigerant having a high temperature and a high pressure flows in the copper pipe 20. The space between the resin structure 70 and the copper pipe 20 serves as the first flow path 31. Water flows as a counterflow in the first flow path 31, and the water is thus heated. The copper pipe 20 of the heat exchanger 100b is branched into two copper pipes 20a and 20b immediately before the entrance into the resin structure 70. The copper pipes 20a and 20b have a helical shape, and are arranged so as to be twisted together within the resin structure 70. With the use of such a copper pipe 20, the efficiency of the heat exchange between the first fluid and the second fluid can be increased, and the pressure loss of the second fluid can be reduced. With the copper pipes 20a and 20b being formed in a helical shape, the first fluid flowing in the first flow path 31 can be stirred.

The resin structures 10, 50, and 70 and the spacers 22, which have been described above, contain as a main component the polymer alloy (P), that is, a polymer alloy of a polyphenylene ether resin and a polystyrene resin. In an example, the above parts are formed only of the polymer alloy (P), while in another example, the parts are formed of a resin composition including the polymer alloy (P) and an inorganic filler.

### (Heat pump water heater)

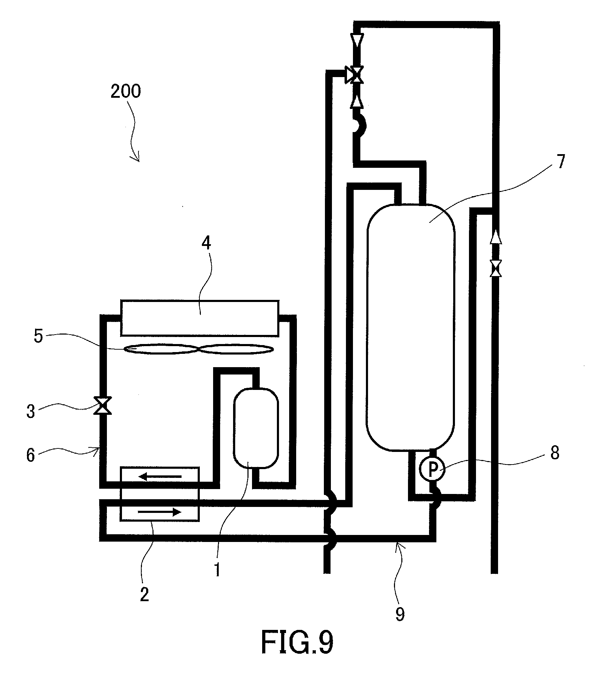

An example of a heat pump water heater using a heat exchanger of the present embodiment is shown in FIG. 9. The heat pump water heater 200 of FIG. 9 includes a refrigerant circulation circuit 6 and a hot water supply circuit 9. The refrigerant circulation circuit 6 includes a compressor 1, a pressure reducing means 3, a heat exchanger 4 for heat absorption, and a fan 5. The hot water supply circuit 9 includes a heat exchanger 2 for heat release, a hot water tank 7, and a flow rate control means 8. A heat exchanger of the present embodiment (e.g., the heat exchanger 100, 100a, or 100b described above) is used as the heat exchanger 2 for heat release. There is no particular limitation on the heat pump water heater 200 except for the use of a heat exchanger of the present embodiment, and a commonly-known configuration can be employed.

The refrigerant circulation circuit 6 uses, for example, carbon dioxide (carbonic acid gas: CO₂) as the refrigerant, and uses a supercritical heat pump cycle in which the pressure of the refrigerant on the high-pressure side is equal to or higher than the critical pressure of the refrigerant. The compressor 1 is driven by its internal electric motor (not shown), compresses the drawn refrigerant to a pressure equal to or higher than the critical pressure, and then discharges the refrigerant. When carbon dioxide is used as the refrigerant, the discharge temperature is controlled so as not to increase above 120°C. The pressure reducing means 3 changes the magnitude of pressure reduction of the refrigerant by being driven by its internal stepping motor (not shown) to change the opening degree of the flow path. The heat exchanger 4 for heat absorption operates so as to absorb atmospheric heat via the fan 5. The heat exchanger 2 for heat release exchanges heat between the refrigerant (second fluid) in the refrigerant circulation circuit 6 and water (first fluid) in the hot water supply circuit 9. The exchanger 2 for heat release is a counterflow heat exchanger configured so that the direction of the flow of the refrigerant and the direction of the flow of water are opposite to each other.

### EXAMPLES

Hereinafter, the present invention will be specifically described by examples. However, the present invention is not limited to the examples given below.

### (Example 1)

An alloy A of a polyphenylene ether resin and a polystyrene resin, which was used in Example 1, will be described below first. It should be noted that the alloy A does not contain any inorganic filler.

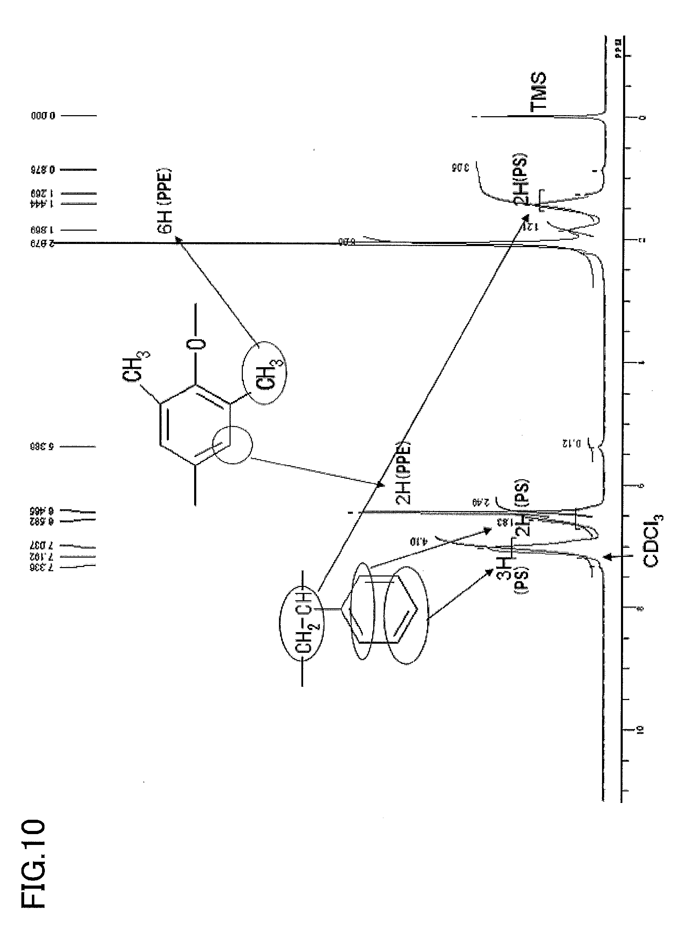

FIG. 10 shows a measurement result of a ¹H NMR (nuclear magnetic resonance) spectrum of the alloy A. The mass ratio of the polyphenylene ether resin to the polystyrene resin was calculated from the measurement result. This mass ratio was calculated from: an average value of integrals per H (hydrogen atom) which was calculated for the polyphenylene ether resin from values of integrals of 2H and 6H peaks (indicated by PPE in the figure); and an average value of integrals per H (hydrogen atom) which was calculated for the polystyrene resin from values of integrals of 2H and 3H peaks (indicated by PS in the figure). The calculated mass ratio (polyphenylene ether resin/polystyrene resin) was 41/59.

Next, the deflection temperature under load of the alloy A was measured according to ASTM-D648 at a stress of 1.82 MPa in order to evaluate the heat resistance of the alloy A. The measured deflection temperature under load was 120°C.

In addition, in order to evaluate the long-term reliability of the alloy A, three types of reliability tests were carried out under high temperature conditions. The details of each test are as described below. It should be noted that the following reliability tests 1 to 3 were performed under accelerated deterioration conditions (accelerated deterioration conditions at high temperature) corresponding to 10-year actual use.

### (Reliability test 1)

The reliability test 1 is a test in which a dumbbell specimen formed of the alloy A is left in air. The deterioration of the resin structure contacting air was evaluated by the reliability test 1.

### (Reliability test 2)

The reliability test 2 is a test in which a dumbbell specimen formed of the alloy A is immersed in water. The deterioration of the resin structure contacting water was evaluated by the reliability test 2.

### (Reliability test 3)

The reliability test 3 is a test in which a dumbbell specimen formed of the alloy A is immersed in copper ion-containing water. The deterioration of the resin structure contacting copper ion-containing water was evaluated by the reliability test 3.

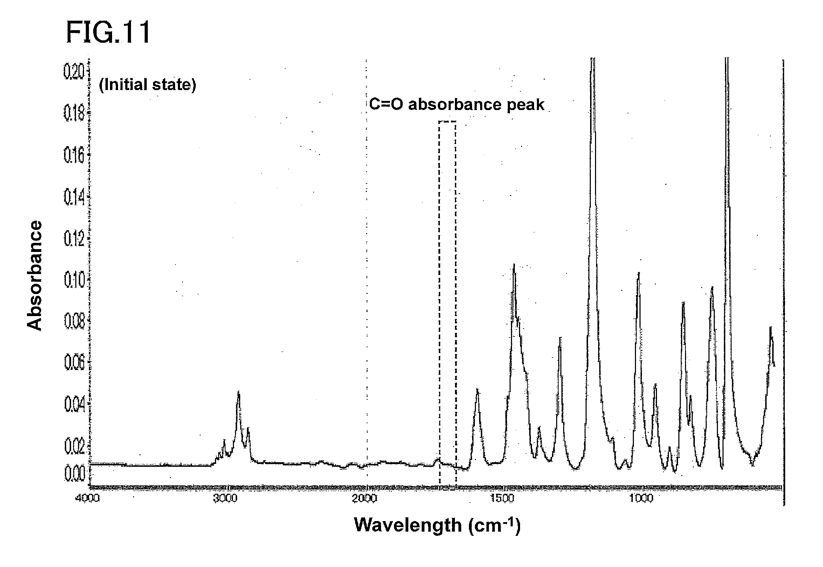

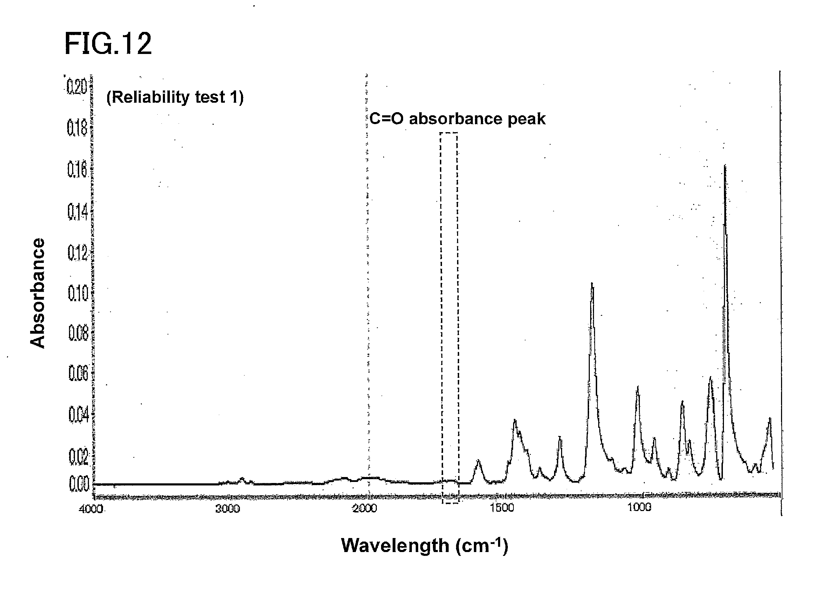

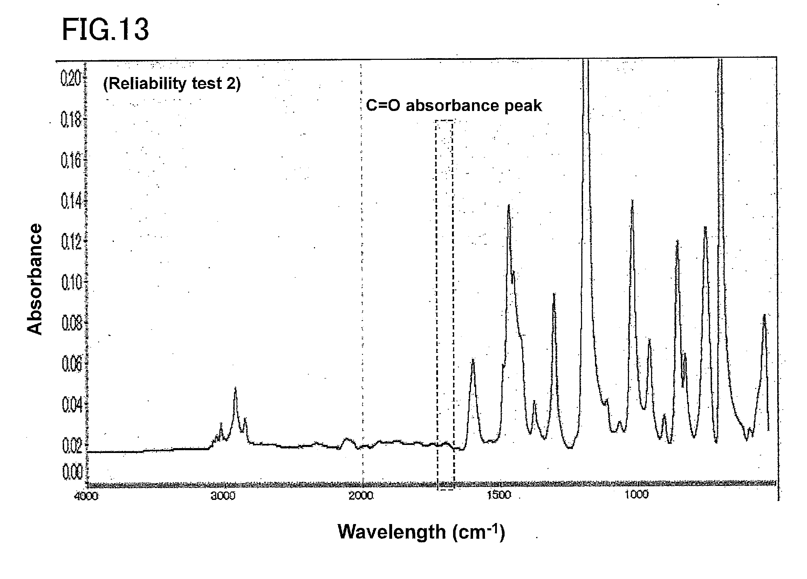

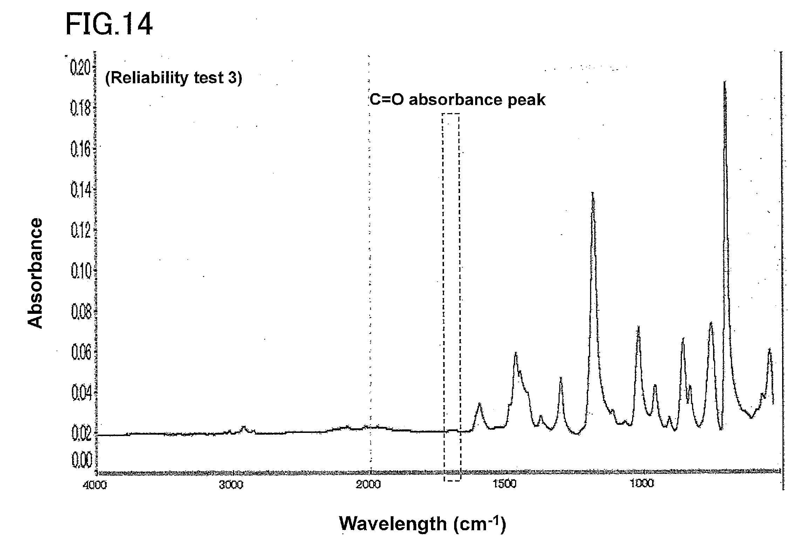

A result of measurement of a FT-IR (Fourier transform infrared) spectrum of the alloy A not having been subjected to any reliability test (initial state) is shown in FIG. 11. In addition, FT-IR spectra of the alloy A having been subjected to the reliability tests 1 to 3 corresponding to 10-year actual use are shown in FIG. 12 to FIG. 14. Generally, when oxidative deterioration by oxygen in air or by dissolved oxygen in water progresses, a peak appears around 1700 cm⁻¹ as a result of production of C=O (carbonyl group). However, for the alloy A, no increase in peak around 1700 cm⁻¹ was observed in any of the reliability tests 1 to 3. It can be inferred from this that the oxidative deterioration of the alloy A did not progress.

In addition, tensile tests were carried out for a dumbbell specimen of Example 1 that had not been subjected to any reliability test (initial state) and dumbbell specimens of Example 1 that had been subjected to the reliability tests 1 to 3. As a result, reduction in strength at break of the dumbbell specimens due to the reliability tests was not observed.

### (Example 2)

In Example 2, evaluation was made on a resin composition composed of an alloy B of a polyphenylene ether resin and a polystyrene resin; and an inorganic filler. This resin composition was composed of 70 parts by mass of the alloy B and 30 parts by mass of the inorganic filler. Glass fiber was used as the inorganic filler.

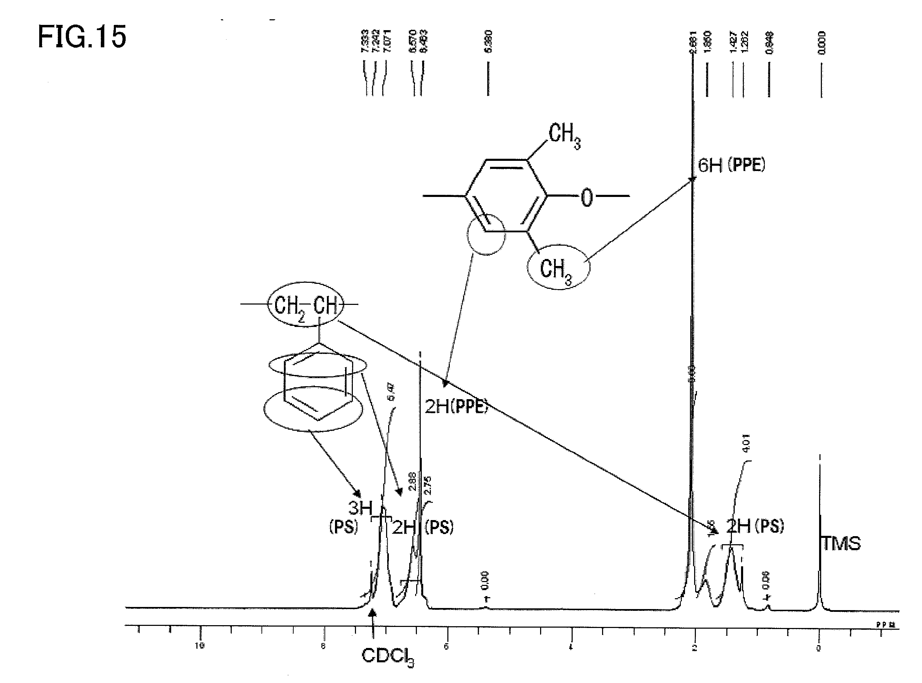

FIG. 15 shows a measurement result of a ¹H NMR (nuclear magnetic resonance) spectrum of the alloy B. Based on the measurement result, the mass ratio of the polyphenylene ether resin to the polystyrene resin was calculated in the same manner as in Example 1. The calculated mass ratio (polyphenylene ether resin/polystyrene resin) was 47/53.

Next, the deflection temperature under load of the alloy B was measured according to ASTM-D648 at a stress of 1.82 MPa in order to evaluate the heat resistance of the alloy B. The measured deflection temperature under load was 140°C.

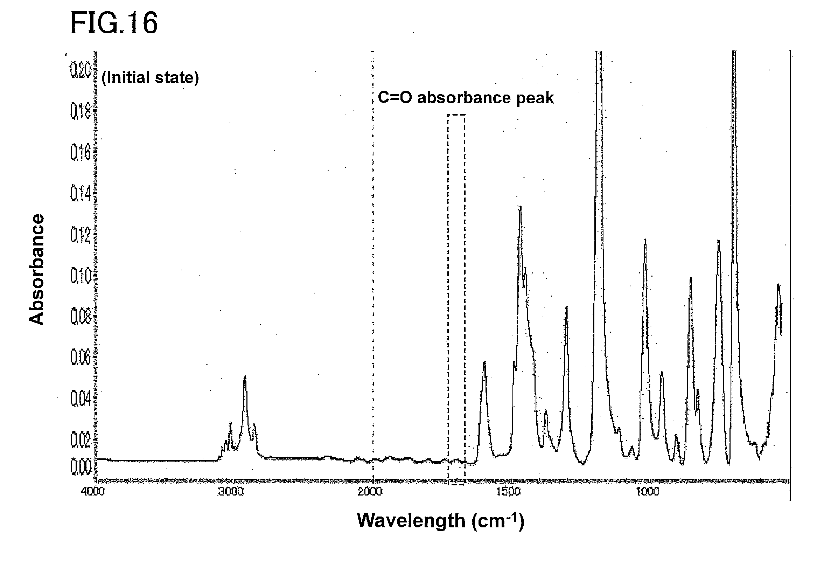

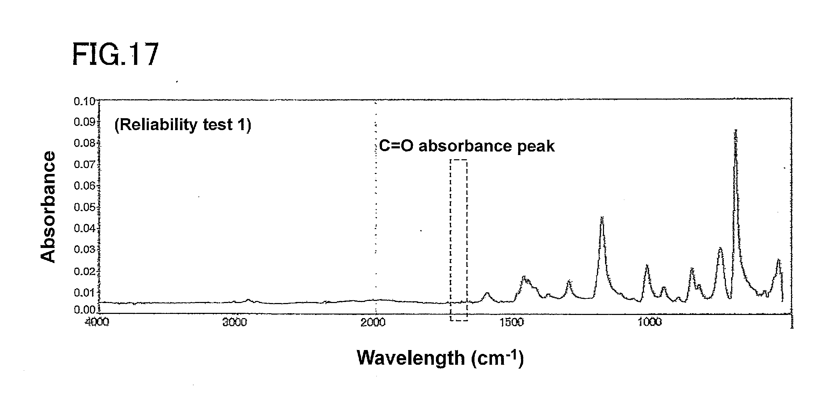

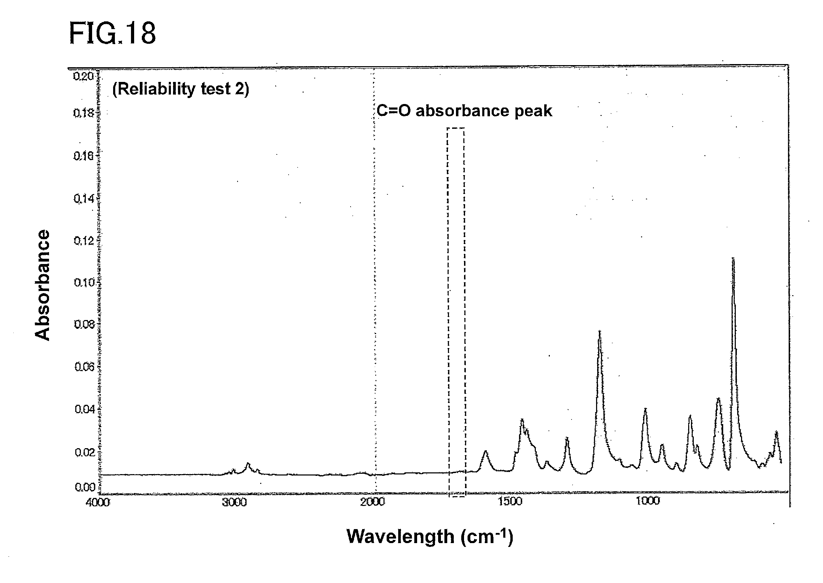

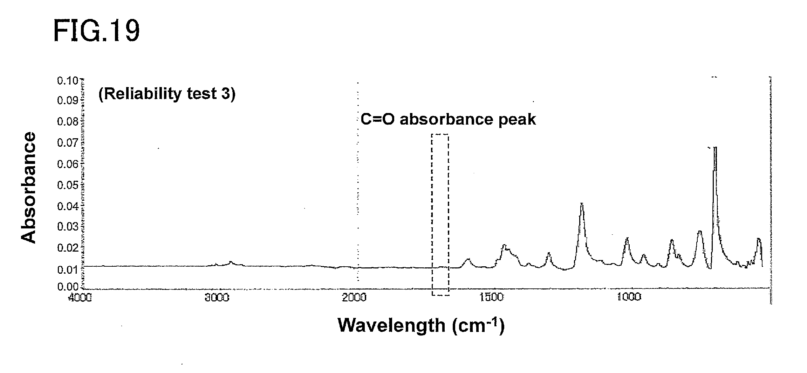

In addition, in order to evaluate the long-term reliability of the alloy B, the reliability tests 1 to 3 described for Example 1 were carried out. FIG. 16 shows a FT-IR spectrum of the alloy B not having been subjected to any reliability test (initial state). In addition, FIG. 17 to FIG. 19 show FT-IR spectra of the alloy B having been subjected to the reliability tests 1 to 3 corresponding to 10-year actual use. As shown in FIG. 16 to FIG. 19, no increase in peak around 1700 cm⁻¹ was observed in any of the reliability tests 1 to 3. Therefore, it can be inferred that oxidative deterioration of the alloy B did not progress.

In addition, tensile tests were carried out for a dumbbell specimen of Example 2 that had not been subjected to any reliability test (initial state) and dumbbell specimens of Example 2 that had been subjected to the reliability tests 1 to 3. As a result, reduction in strength at break of the dumbbell specimens due to the reliability tests was not observed.

### (Comparative Example 1)

In Comparative Example 1, evaluation was made on an alloy C of a polyphenylene ether resin and a polystyrene resin. It should be noted that the alloy C does not contain any inorganic filler.

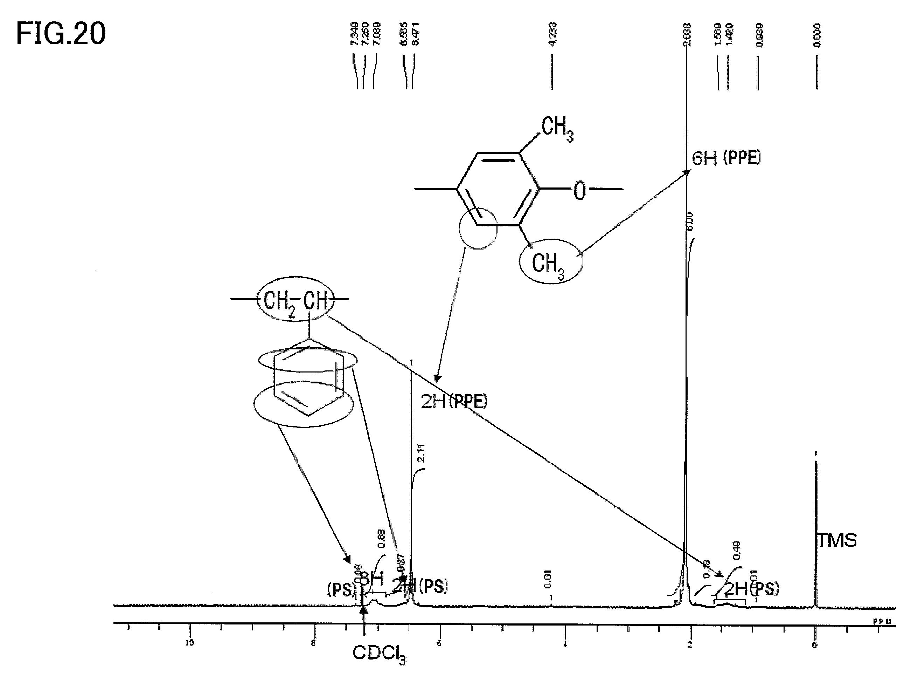

FIG. 20 shows a measurement result of a ¹H NMR (nuclear magnetic resonance) spectrum of the alloy C. Based on the measurement result, the mass ratio of the polyphenylene ether resin to the polystyrene resin was calculated in the same manner as in Example 1. The calculated mass ratio (polyphenylene ether resin/polystyrene resin) was 83/17.

Next, the deflection temperature under load of the alloy C was measured according to ASTM-D648 at a stress of 1.82 MPa in order to evaluate the heat resistance of the alloy C. The measured deflection temperature under load was 170°C.

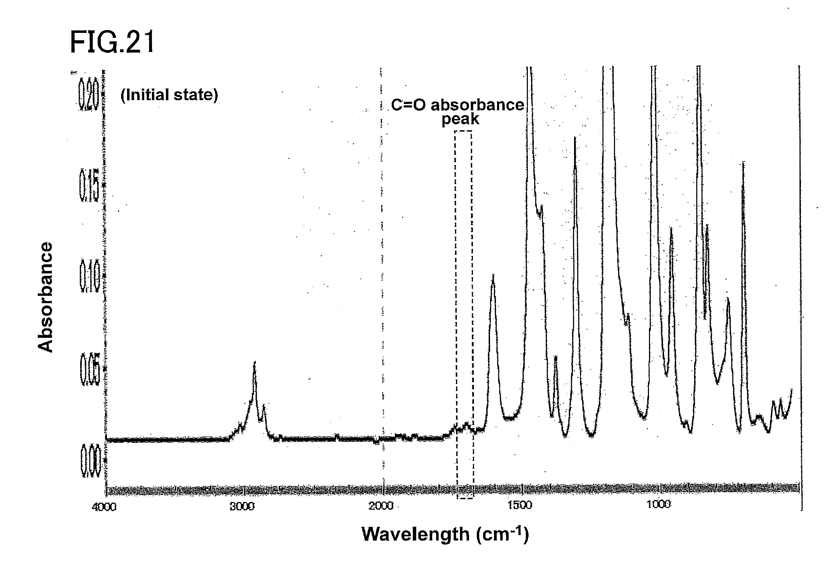

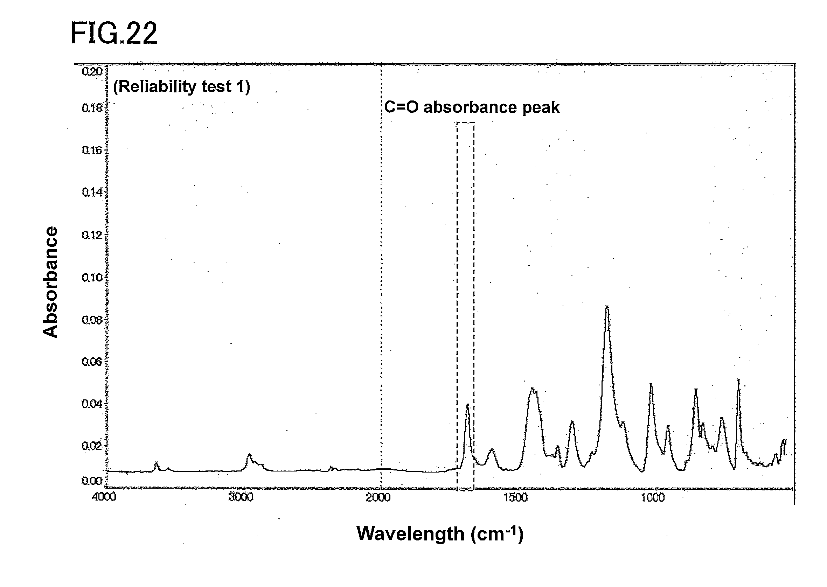

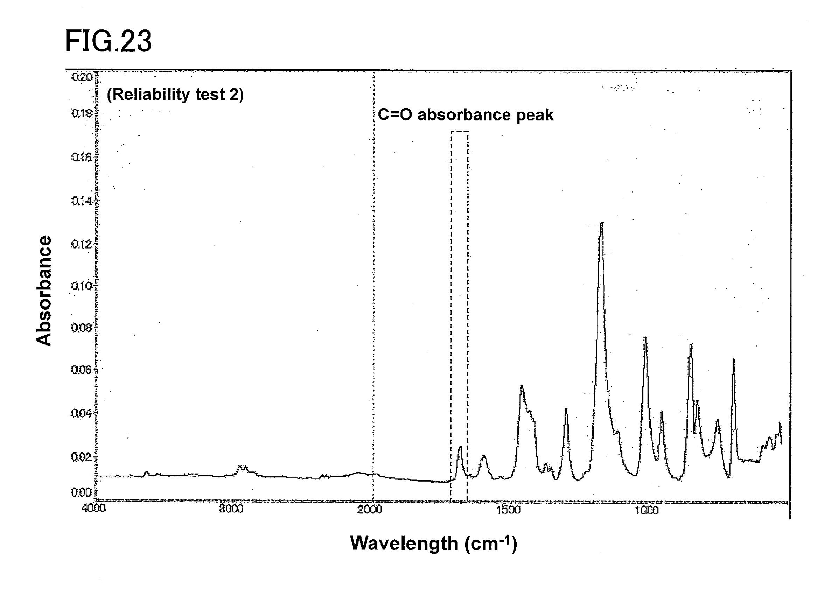

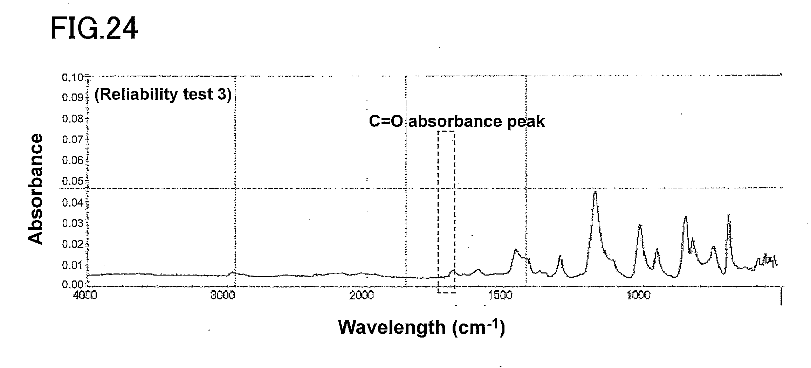

FIG. 21 shows a measurement result of a FT-IR spectrum of the alloy C not having been subjected to any reliability test (initial state). In addition, FIG. 22 to FIG. 24 show FT-IR spectra of the alloy C having been subjected to the reliability tests 1 to 3 corresponding to 10-year actual use. As shown in FIG. 21 to FIG. 24, for the alloy C, an increase in peak around 1700 cm⁻¹ was observed in all of the reliability tests 1 to 3. This result suggests that oxidative deterioration progressed in air, in water, and in copper ion-containing water. The amount of the increase in peak was largest in the reliability test 1, smaller in the reliability test 2, and smallest in the reliability test 3.

In addition, tensile tests were carried out for a dumbbell specimen of Comparative Example 1 that had not been subjected to any reliability test (initial state) and dumbbell specimens of Comparative Example 1 that had been subjected to the reliability tests 1 to 3. As a result, reduction in strength at break of the dumbbell specimens caused by oxidative deterioration was not observed under the conditions of the reliability tests 2 and 3. Under the conditions of the reliability test 1, however, oxidative deterioration progressed to a marked extent, and the strength at break was reduced to 41% of the initial value.

The relationship between the composition and the properties of an alloy will be discussed below for the alloys used in Examples 1 and 2 and Comparative Example 1.

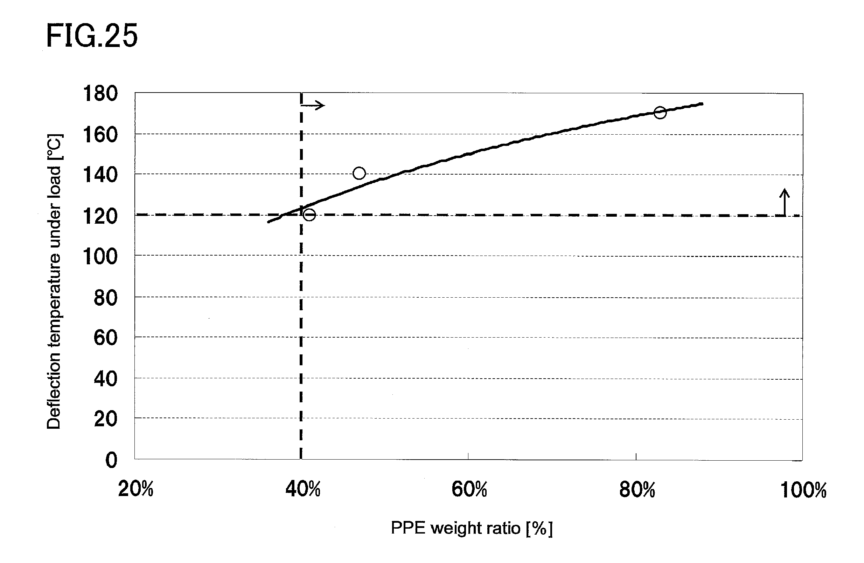

FIG. 25 is a graph showing a relationship between the mass ratio of a polyphenylene ether resin (PPE) in an alloy and the deflection temperature under load measured under the above-described conditions. As shown in FIG. 25, there is a tendency that the larger the mass ratio of the polyphenylene ether resin is, the higher the deflection temperature under load is. In the case where carbon dioxide is used as a refrigerant, the maximum temperature of the refrigerant discharged from the compressor 1 is 120°C. In this case, the maximum temperature of the refrigerant at the entrance of the copper pipe 20 is 120°C. Therefore, it is possible to avoid thermal deformation of the resin structure by using an alloy having a deflection temperature under load which is higher than 120°C. Specifically, it is understood from the graph of FIG. 25 that an alloy in which the mass ratio of the polyphenylene ether resin is 40% or more is favorably used.

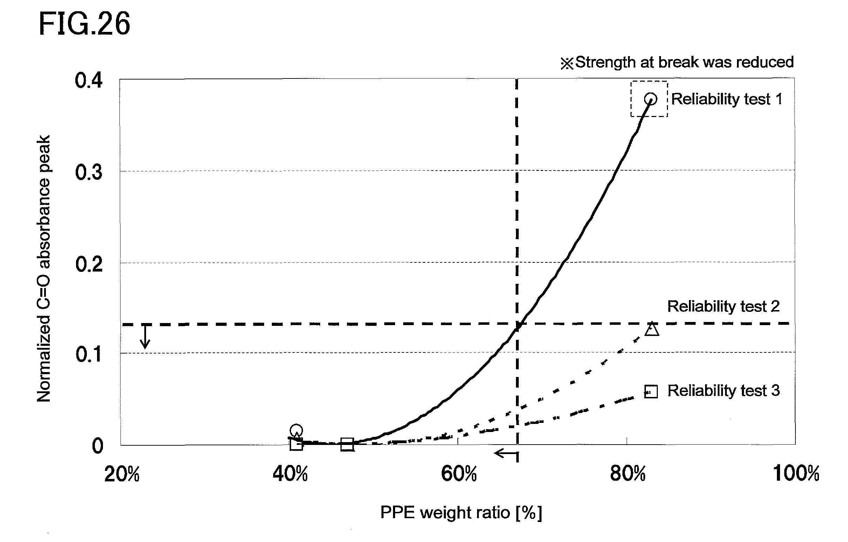

FIG. 26 is a graph showing a relationship between the mass ratio of a polyphenylene ether resin (PPE) in an alloy and the absorbance peaks of carbonyl groups (absorbance peaks around 1700 cm⁻¹) measured after the reliability tests 1 to 3 were carried out. The vertical axis in FIG. 26 represents values obtained as follows: the peak areas of the absorbance peaks around 1700 cm⁻¹ (absorbance peaks of carbonyl groups) measured after the reliability tests 1 to 3 were carried out were normalized by the peak areas of the absorbance peaks at 1180 cm⁻¹ measured after the reliability tests 1 to 3 were carried out (that is, values obtained by dividing the former peak areas by the latter peak areas).

As shown in FIG. 26, there is a tendency that the larger the mass ratio of the polyphenylene ether resin is, the higher the normalized value of the absorbance peak of carbonyl groups (absorbance peak around 1700 cm⁻¹) is. In the case of the alloy in which the mass ratio of the polyphenylene ether resin to the polystyrene resin was 83/17, the strength at break was reduced to 41% of the initial value after the reliability test 1 was carried out, while after the reliability test 2 was carried out, no reduction in strength at break was observed. This demonstrates that the reduction in mechanical strength can be avoided as long as the degree of progression of oxidative deterioration is such that the normalized value of the absorbance peak of carbonyl groups (absorbance peak around 1700 cm⁻¹) is 0.13 or less. That is, by the use of an alloy in which the mass ratio of the polyphenylene ether resin is 65% or less, a sufficient mechanical strength can be maintained even after exposure to air, to water, or to copper ion-containing water for a duration corresponding to 10-year actual use. As can be seen from FIG. 25, when the mass ratio of the polyphenylene ether resin is 65%, the deflection temperature under load of the alloy is about 160°C.

As described above, by forming the resin structure using the polymer alloy (P) containing the polyphenylene ether resin and the polystyrene resin at a mass ratio of 40/60 to 65/35, it is possible to ensure the same level of heat resistance and long-term reliability as those obtained by using polyphenylene sulfide resins which have high chemical stability. The resin structure formed of the polymer alloy (P) has excellent resistance to air (demonstrated by the reliability test 1), excellent resistance to water (demonstrated by the reliability test 2), and excellent resistance to copper ion-containing water (demonstrated by the reliability test 3). In addition, the polymer alloy (P) has a density of 1.0 to 1.1 kg/L, and is about 30% lighter than polyphenylene sulfide resins which have a density of 1.3 to 1.4 kg/L. Furthermore, the polymer alloy (P) is less expensive than polyphenylene sulfide resins. Therefore, reduction in weight and cost of heat exchangers can be achieved by using the polymer alloy (P) instead of polyphenylene sulfide resins.

### INDUSTRIAL APPLICABILITY

The present invention can be applied to heat exchangers and various devices using heat exchangers. For example, the heat exchanger of the present invention is useful as a heat exchanger for a heat pump water heater using a refrigerant. In addition, the heat exchanger of the present invention can be used also as a heat exchanger that exchanges heat between gases or between liquids.

## Claims

1. A heat exchanger that exchanges heat between a first fluid and a second fluid, the heat exchanger comprising:
a resin structure forming a first flow path through which the first fluid flows; and
a copper pipe forming a second flow path through which the second fluid flows, the copper pipe having at least a portion disposed in the first flow path, wherein
a resin component of a resin composition constituting the resin structure contains, as a main component, a polymer alloy of a polyphenylene ether resin and a polystyrene resin, and
a mass ratio of the polyphenylene ether resin to the polystyrene resin in the polymer alloy is in the range of 40/60 to 65/35.

2. The heat exchanger according to claim 1, wherein the resin composition comprises an inorganic filler.

3. The heat exchanger according to claim 1, wherein the first fluid is water, and the second fluid is a refrigerant other than water.

4. The heat exchanger according to claim 3, wherein the second fluid is carbon dioxide.

5. The heat exchanger according to claim 1, wherein a deflection temperature under load of the resin composition as measured according to ASTM-D648 at a stress of 1.82 MPa is 120°C or higher.

6. The heat exchanger according to claim 1, wherein, in a Fourier transform infrared spectrum of the resin composition, a peak area of an absorbance peak around 1700 cm⁻¹ attributed to carbonyl groups is 0.13 times or less a peak area of an absorbance peak at 1180 cm⁻¹.
